# EUROPEAN PATENT APPLICATION

(11) **EP 2 733 653 A2**
(43) Date of publication of application: **21.05.2014**
(21) Application number: 13192796.4
(22) Date of filing: 14.11.2013
(51) Int. Cl.: G06Q 20/18, G06Q 20/12

(54) **Consumer operated kiosks for purchasing items online and associated systems and methods**

(30) Priority: 15.11.2012 US 201261726720 P; 08.03.2013 US 201313790674
(71) Applicant: Outerwall Inc., Bellevue, WA 98004 (US)
(72) Inventor: Lennon, Kevin, Maple Valley, WA Washington 98038 (US)
(74) Representative: Grünecker, Kinkeldey, Stockmair & Schwanhäusser

(57) **Abstract**

The present disclosure is directed to consumer operated kiosks for purchasing items online and associated systems and methods. In one embodiment, for example, a method of making purchases online can include receiving funds (e.g., bills and/or coins) from a user at a consumer operated kiosk, and receiving online order information at the consumer operated kiosk. The online order information can be associated with a user account stored on a remote database and can include a cost of an online order from a third party merchant. The method can further include initiating transfer of at least a portion of the received funds to the third party merchant to pay for the online order.

## Description

### CROSS REFERENCE TO RELATED APPLICATION

This application claims the benefit of and priority to U.S. Provisional Patent Application No. 61/726,720, filed November 15, 2012, which is incorporated herein by reference in its entirety.

### TECHNICAL FIELD

The present disclosure relates generally to systems, apparatuses and methods for shopping online and, more particularly, for facilitating paying for online purchases.

### BACKGROUND

Online shopping allows consumers to purchase goods and services from sellers directly over the Internet. Seller websites can be accessed 24 hours a day from the convenience of the consumer's own home, and can provide more information than is typically found in stores, such as consumer reviews and detailed product specifications. Consumers can easily comparison shop by visiting the sites of multiple merchants and, once purchased, the items can be shipped directly to a location selected by the buyer without ever needing to enter a retail establishment.

The conveniences associated with online shopping, as well the increasing availability of the Internet, has led online shopping to become an ever more prevalent form of purchasing goods and services. Still, many "un-banked" consumers do not have a credit card or bank account necessary to make online purchases, leaving an entire segment of the population unable to access the virtual marketplace. In addition, many consumers prefer to use cash as a method of payment, but must resort to credit or debit card purchases when making online purchases. As a result of these drawbacks, online shopping is therefore unavailable or underused by un-banked and cash-centric consumers.

### BRIEF DESCRIPTION OF THE DRAWINGS

Figure 1 is an isometric view of a consumer operated kiosk configured in accordance with embodiments of the disclosure.

Figures 2A and 2B illustrate various aspects of a web page for purchasing items online in accordance with embodiments of the disclosure.

Figure 3 is a schematic diagram illustrating aspects of a display page of a user account associated with the consumer operated kiosk of Figure 1.

Figure 4 illustrates a suitable network environment for implementing various aspects of the online purchasing system of the disclosure.

Figure 5 is a flow diagram of a routine for purchasing items online using a consumer operated kiosk configured in accordance with embodiments of the disclosure.

Figure 6 is a flow diagram of a routine for purchasing items online using a consumer operated kiosk configured in accordance with other embodiments of the disclosure.

Figure 7 is a flow diagram of a routine for purchasing items online using a consumer operated kiosk configured in accordance with further embodiments of the disclosure.

Figure 8 is a flow diagram of a routine for purchasing items online using a consumer operated kiosk configured in accordance with still further embodiments of the disclosure.

### DETAILED DESCRIPTION

The present disclosure describes various embodiments of consumer operated kiosks for purchasing items online and associated systems and methods. Consumer operated kiosks configured in accordance with several embodiments of the present disclosure allow users to deposit cash, coins, etc. into the kiosk and use the deposited funds to purchase items (e.g., goods, services, etc.) online and/or complete a purchase of items previously ordered online. In various embodiments, for example, a user can browse a seller website (with, e.g., a personal computer, the kiosk, etc.), place various items into a virtual shopping cart, and then deposit the requisite funds into the kiosk to pay for the items in the shopping cart. The kiosk can initiate transfer the funds to the seller to complete the purchase and/or the kiosk can provide the user with a unique code or identifier that enables the user to complete the purchase online by entering the code or identifier at e.g., the seller website. The kiosk can also be configured and implemented to add deposited funds to online accounts (e.g., Pay Pal®, eBay®, etc.) for making future purchases.

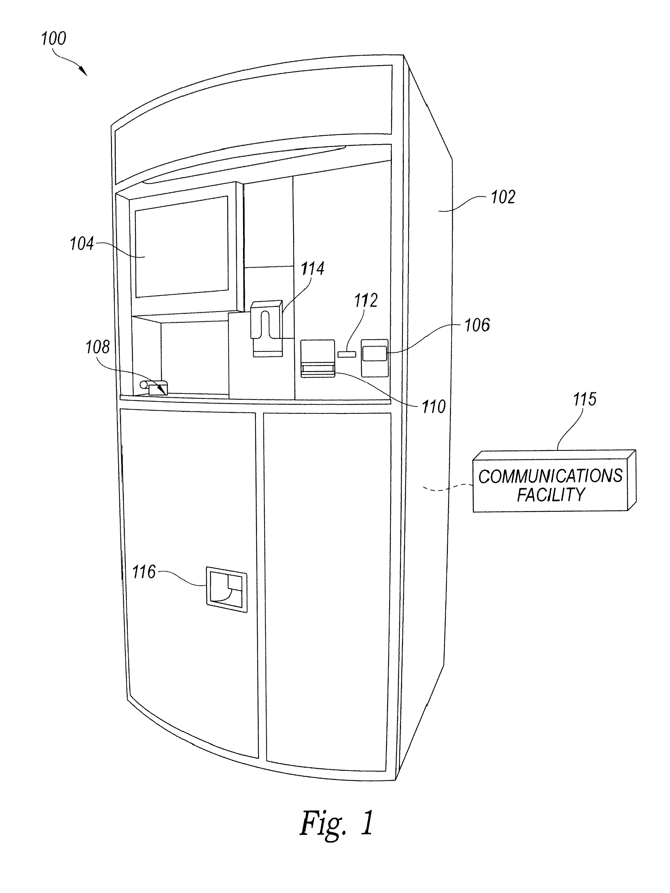

Certain details are set forth in the following description and in Figures 1-8 to provide a thorough understanding of various embodiments of the disclosure. Other well-known structures and systems often associated with consumer operated kiosks, online shopping, and related commerce systems have not been shown or described in detail below to avoid unnecessarily obscuring the descriptions of the various embodiments of the disclosure. Additionally, a person of ordinary skill in the relevant art will understand that the disclosure may have additional embodiments that may be practiced without several of the details described below. In other instances, those of ordinary skill in the relevant art will appreciate that the methods and systems described can include additional details without departing from the spirit or scope of the disclosed embodiments.

Many of the details, dimensions, functions and other features shown and described in conjunction with the Figures are merely illustrative of particular embodiments of the disclosure. Accordingly, other embodiments can have other details, dimensions, functions and features without departing from the spirit or scope of the present disclosure. In addition, those of ordinary skill in the art will appreciate that further embodiments of the disclosure can be practiced without several of the details described below.

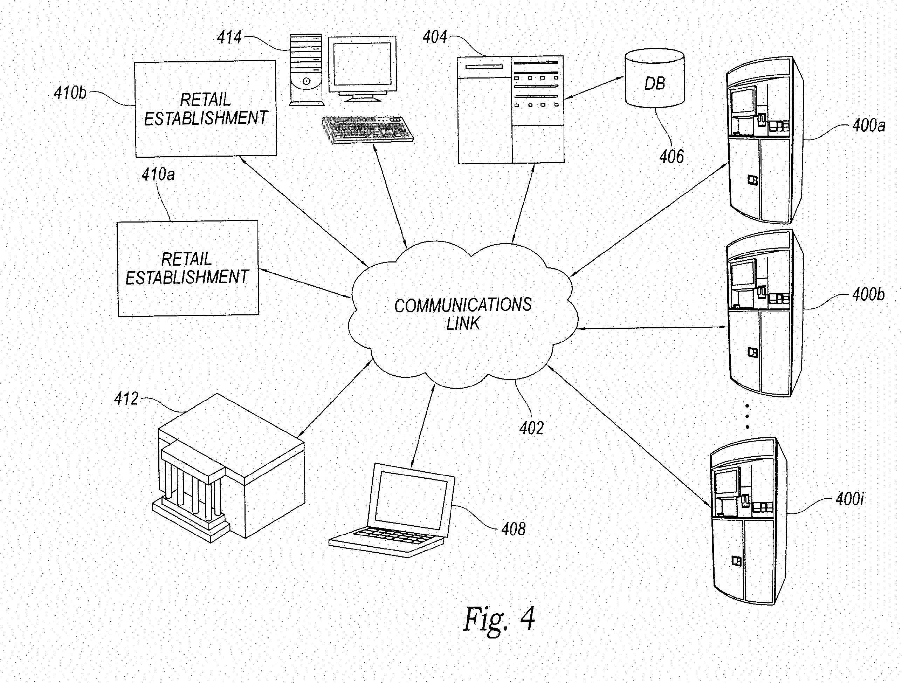

Figure 1 is an isometric view of a consumer operated kiosk 100 ("kiosk 100") for making online purchases in accordance with embodiments of the disclosure. The kiosk 100 includes a housing 102, a user interface 104, and mechanisms for receiving payments from users, such as a bill acceptor 106, a coin acceptor 108 (e.g., a bulk coin acceptor, a change slot, etc.), and/or a card reader 110 (e.g., a magnetic card swipe). The user interface 104 can include a display screen or monitor for operationally interfacing with users via visual and/or audible signals, textual instructions, animations, dialogue boxes, touch screens, selector buttons, icons, prompts, and/or other features provided and/or displayed to users. In the illustrated embodiment, the user interface 104 includes a touch screen that can provide visual and/or audio information to and receive information from users. In other embodiments, the user interface 104 can include other input devices that can provide and/or receive user information, such as a keyboard, an encrypted PIN pad, a voice command device, and/or other suitable user input devices known in the art. In the illustrated embodiment, the kiosk 100 also includes a card slot 112 for receiving and/or dispensing cards (e.g., gift cards, credit cards, debit cards, etc.), a dispensing slot 114 for dispensing vouchers, receipts, and/or coupons, and a coin return 116 that returns unaccepted coins to the user. In certain aspects of the technology, the kiosk 100 can include a communications facility 115 (e.g., a router, modem, etc.) that operably couples the kiosk 100 to a communications link (e.g., the Internet, LAN, intranet, etc.; described in greater detail below with reference to Figure 4). The communications facility 115 allows the kiosk 100 to wirelessly communicate with various remote computers (e.g., computers at a central processing facility, host computers, etc.), servers, remote databases, financial institutions, third party merchants, other consumer operated kiosks within the same network, and/or other remote computer systems to perform various notification and transaction functions.

Various aspects of the kiosk 100 can be at least generally similar in structure and function to corresponding features of the kiosks and related systems disclosed in U.S. Patent No. 7,653,599, filed February 14, 2003, entitled "METHODS AND SYSTEMS FOR EXCHANGING AND/OR TRANSFERRING VARIOUS FORMS OF VALUE"; U.S. Patent No. 8,033,375, filed February 14, 2003, entitled "METHODS AND SYSTEMS FOR EXCHANGING AND/OR TRANSFERRING VARIOUS FORMS OF VALUE"; U.S. Patent No. 8,103,586, filed December 28, 2009, entitled " METHODS AND SYSTEMS FOR EXCHANGING AND/OR TRANSFERRING VARIOUS FORMS OF VALUE"; and U.S. Patent Publication No. 2006/0207856, filed December 5, 2005, entitled "U.S. Patent No. 8,033,375, filed February 14, 2003, entitled "METHODS AND SYSTEMS FOR EXCHANGING AND/OR TRANSFERRING VARIOUS FORMS OF VALUE"; each of which is incorporated herein by reference in its entirety.

Embodiments of the kiosk 100 are configured to integrate cash payment with online shopping. For example, a user can browse a merchant or seller website (e.g., Amazon.com, Nordstrom.com, Drugstore.com, eBay.com, Buy.com, etc.) using a personal computer, tablet, smart phone, other handheld computing device, and/or other personal electronic device communicatively coupled to the Internet, and add items that the user would like to purchase to a virtual shopping cart. The user may optionally log into his or her user account associated with the seller website to save the items in the virtual shopping cart. Once the user is finished shopping, the user can opt to check out by navigating to the seller's payment web page. The payment web page can include various payment options, including an option to pay with cash and/or coin at the kiosk 100 and/or other consumer operated kiosks communicatively linked thereto via the communications link.

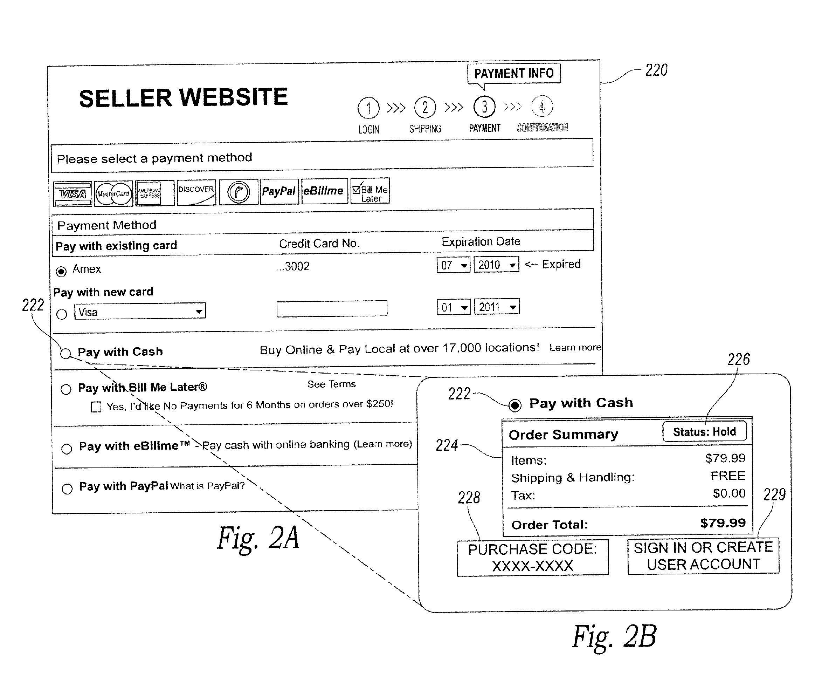

Figures 2A and 2B, for example, illustrate various aspects of a payment web page 220 (Figure 2A) including a "Pay with Cash" payment option 222 that allows the user to pay with funds received at the kiosk 100 (Figure 1). When the selects the "Pay with Cash" payment option 222, the web page 220 can open an order summary display 224 (Figure 2B) in the form of a pop-up window, a web page inset, or a new web page that displays information related to the user's order. The order summary display 224 can include, for example, the subtotal of the items in the virtual shopping cart, shipping and handling, tax, the total cost of the online order, and/or other information related to the user's online order. As shown in Figure 2B, the user selection of the "Pay with Cash" payment option 222 can change the transaction status of the online order to a hold condition (e.g., as indicated by the "Status: Hold" icon 226). In the hold condition, the items in the virtual shopping cart are reserved and/or the transaction is temporarily suspended until the user pays for the online order (e.g., at the kiosk 100 of Figure 1) or until a predetermined period of time has elapsed (e.g., 24 hours, two days, five days, ten days, etc.), whichever occurs first. The online order or transaction information (e.g., what items are in the virtual shopping cart, the total cost of the items, the buyer's information, the delivery address, etc.) and the transaction status of the online order (e.g., hold, suspended, etc.) can be saved on one or more remote databases accessed via the communications link. As described in greater detail below, the remote databases may be associated with the kiosk system (e.g., a "pay-by-cash" kiosk system) and/or the third party online merchant/seller or retail establishment from which the online order is being placed.

In various embodiments, the summary display 224 can also provide the user with a transaction identifier or unique purchase code 228 (e.g., an alphanumeric code, a numeric code, etc.) that is stored on a remote database and associated with the user's order. As described in further detail below, the purchase code 228 can be generated by the third party merchant or the pay-by-cash kiosk system. The user can enter the purchase code 228 at the kiosk 100 (Figure 1) via the user interface 104 to recall the online order information and pay for the order by depositing funds in the kiosk 100.

In other aspects of the technology, the online order information and transaction status can be associated with (e.g., linked to) a user account stored in a remote database managed by, e.g., a third party. The user account, for example, may be stored on a remote database linked to the pay-by-cash kiosk system provided by the kiosk 100 (Figure 1). In other embodiments, the remote database can be associated with the third party online merchant/seller. Users can create and sign into or otherwise access their individual user account at the kiosk 100 via the user interface 104 and/or remotely on a website (e.g., using a personal computer, smart phone, etc.). In certain embodiments, selecting the "Pay with Cash" option 222 (Figures 2A and 2B) can display a login icon 229 that allows the user to create or sign into a user account (e.g., via a username and password), and save the online order information (e.g., total cost) and transaction status in the user account on the remote database (e.g., associated with the pay-by-cash kiosk system). In other embodiments, the user must first log into a user account (e.g., using a username and password, email address, etc.) before selecting the "Pay with Cash" option 222, and the remote database can then associate the online order information with the user account.

Referring back to Figure 1, once the user is ready to pay for the order, the user can go to the kiosk 100 (e.g., located in or near a grocery store, drug store, mall, etc.), and deposit funds (e.g., bills and/or coins) via the bill acceptor 106 and/or the coin acceptor 108. In various embodiments, the user can access his or her online order before or after depositing by providing the purchase code 228 (Figure 2B) via the user interface 104. In other embodiments, the user can access the online order information by logging into his or her user account (e.g., associated with the pay-by-cash kiosk system or the seller's website) via the user interface 104. The kiosk 100 may be configured to identify the user by a username and password, email address, biometrics (e.g., using fingerprint, eye iris, or facial recognition software), and/or other suitable user identification means. The kiosk 100 can then retrieve the online order information associated with the user account and display it on the user interface 104.

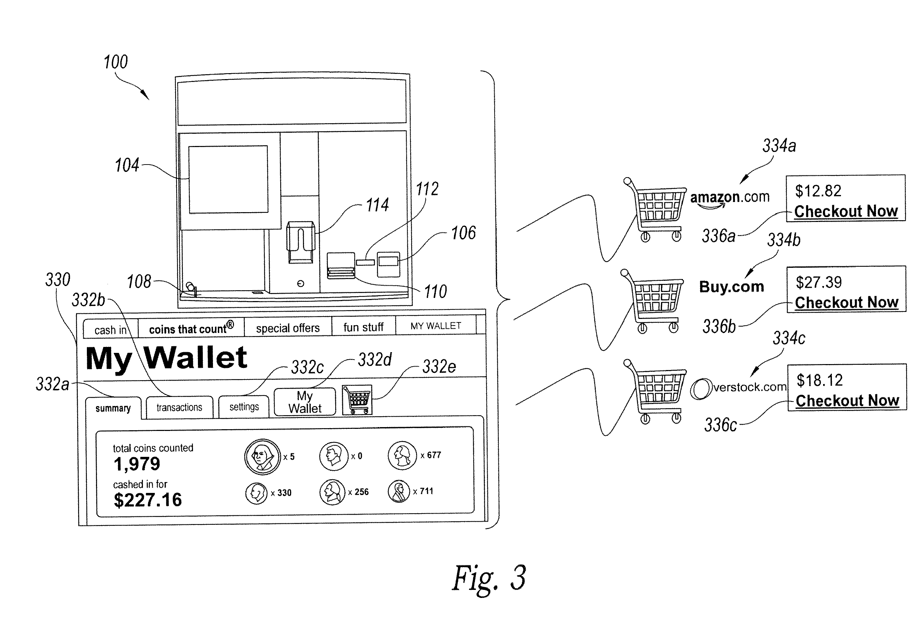

Figure 3, for example, illustrates a user account display page 330 that can be displayed on the user interface 104 of the kiosk 100 (a portion of which is shown in Figure 3) after the user has logged into his or her user account. The display page 330 can include various icons, buttons, and/or tabs 332 that allow the user to navigate to various aspects of the user account. In the embodiment illustrated in Figure 3, for example, the display page 330 includes an account summary tab 332a, a transactions tab 332b, a settings tab 332c, a "My Wallet" tab 332d, and a shopping cart tab 332e. In other embodiments, the display page 330 can include more or less tabs 332 and/or the tabs 332 may be associated with other aspects of the user account and the pay-by-cash kiosk system.

As shown in Figure 3, the summary tab 332a can display the total number of the user's coins and/or bills counted by the kiosk 100 during the current transaction and the value associated with the funds received by the kiosk 100. Selecting the transactions tab 332b can navigate the user interface 104 to a page that displays the user's previous transactions at the kiosk 100 and/or kiosks within the same network. Selecting the settings tab 332c can navigate the user interface 104 to a page that allows the user to modify settings associated with the user account, including the user's password, email, preferences, and/or other settings.

Selecting the "My Wallet" tab 332d can navigate the user interface 104 to display the total funds available to the user for making online purchases. This may include a monetary value equal or related to the total amount of bills and coin deposited into the kiosk 100 during the present transaction, previous transactions at the kiosk 100, and/or previous transactions at other kiosks communicatively coupled thereto. The user can access the monetary value to pay for future purchases from an online merchant, and the amount transferred to the online merchant to pay for the online orders can be deducted from the monetary value. In various embodiments, for example, the user can log into his or her user account (e.g., using a personal computer, the kiosk 100, a handheld computing device application, etc.), and select a merchant (e.g., Amazon) from which the user would like to make an online purchase (e.g., by selecting from a list of merchants). The monetary value or portion thereof can be associated with a unique code, e-certificate, and/or gift card identifier stored on the remote database, and this information can be provided to the user (e.g., displayed on the user interface 104 of the kiosk 100, sent to the user via email, displayed on a handheld computing device (e.g., a smart phone, tablet, etc.) or personal computer logged into the user account, communicated to a handheld computing device application (e.g., a smart phone application) using near field communication, etc). The user can then enter the unique code or identifier during online checkout at the selected seller's website (e.g., by entering the code or identifier in a designated box) to apply the monetary value toward the online purchase. In other embodiments, the unique code or identifier provided to the user is generic and capable of use at a plurality of online sellers.

In certain embodiments, the kiosk 100 may also be configured to allow users to load value from gift cards, prepaid credit cards, debit cards, e-certificates, etc. to their user accounts. The kiosk 100, for example, can read and/or receive closed-loop and/or open-loop gift cards via the card slot 112, and add the value associated with the gift card (accessed via the communications link) to the user's account. When the gift card is associated with a certain retail establishment or merchant (i.e., a closed-loop gift card), the gift card value may only be used to make purchases from that specific retailer. If the gift card is an open-loop gift card (e.g., a VISA gift card), the gift card value may be added to the currency deposited into the user's account and applied to future purchases accordingly.

In certain embodiments, the kiosk 100 can be configured to charge a fee for purchasing items online using the pay with cash feature. The kiosk 100, for example, can deduct a percentage (e.g., 2%, 5%, 8%, 10%, etc.) of the total funds (e.g., bills and/or coins) counted by the kiosk 100, and the remainder can be used to pay for online purchases. In other embodiments, the fee can be related to the total cost of the online purchase (e.g., 2%, 5% or 10% of the online purchase) or a predetermined value (e.g., $3, $5, $10, etc.). In further embodiments, the fee can be associated with the type of funds added to the kiosk 100 (e.g., bills, coin, gift card, etc.) and/or the online merchant from which the purchase is made. The kiosk 100, for example, can deduct a percentage or predetermined value of the bills deposited and a different value of the gift card value deposited. In further embodiments, the fee can be omitted.

Selecting the shopping cart tab 332e navigates the user interface 104 to display the online orders the user has placed on hold at various online shopping websites. As illustrated in Figure 3, for example, the shopping cart page can display individual virtual shopping carts (identified individually as first through third shopping carts 334a-c, respectively, and referred to collectively as the shopping carts 334) corresponding to the orders the user has placed on hold (e.g., via the "Pay with Cash" option 222 of Figures 2A and 2B) and the total amount due for each shopping cart 334.

When the user has sufficient funds in the user account to pay for at least one of the orders, the user can select a "Checkout Now" icon (identified individually as first through third "Checkout Now" icons 336a-c, respectively, and referred to collectively as the "Checkout Now" icons 336) associated with one or more of the virtual shopping carts 334. The kiosk 100 can then communicate directly with the seller (e.g., a retail establishment) via the communications link to transfer funds from the user account associated with the pay-with-cash system and/or the kiosk 100 to the seller and complete the transaction. As discussed above, in some embodiments the seller website (e.g., eBay.com) provides the user with a purchase code (e.g., the purchase code 228 of Figure 2B) when the user selects a pay with cash option. The kiosk 100 may be configured to request the user to enter the purchase code via the user interface 104 to complete the purchase. In certain embodiments, the user must be signed into his or her user account to enter the purchase code, and in other embodiments the purchase code is itself sufficient to complete the purchase (without signing into a user account).

In other embodiments, selecting the "Checkout Now" icon 336 can prompt the kiosk 100 to print and dispense a voucher via the dispensing slot 114. The voucher can include a unique code (e.g., an alphanumeric code, a bar code, etc.) stored on a remote database and associated with a monetary value at least equal to the total cost of the selected order. In this embodiment, the user can access the seller's payment web page (e.g., the payment web page 220 illustrated in Figure 2) via a personal device (e.g., a laptop or smart phone), and enter the unique code into a correspondingly field to pay for and complete the online purchase. In further embodiments, the kiosk 100 may be configured to interact with handheld computing devices (e.g., smart phones) using a near field communication system to transfer the unique code or value directly to the handheld computing device, which can then transmit the code to the seller website to implement payment. For example, a virtual voucher can be loaded onto a smart phone application associated with the kiosk system and/or the retailer, and the information in the virtual voucher can then be sent to the seller to implement payment at the seller website to purchase the items in the shopping cart. Further features of transferring funds (e.g., bills and coins) to and from a mobile commerce platforms are disclosed in U.S. Patent Application No. 13/304,254, filed November 23, 2011, entitled "MOBILE COMMERCE PLATFORMS AND ASSOCIATED SYSTEMS AND METHODS FOR CONVERTING CONSUMER COINS, CASH, AND/OR OTHER FORMS OF VALUE FOR USE WITH SAME", which is incorporated herein by reference in its entirety. In still further embodiments, the kiosk 100 can associate a monetary value with a unique identifier (e.g., a gift card number, an e-certificate, or some other form of payment instrument) and dispense a gift card or other medium (e.g., a paper voucher, e-certificate, etc.) containing the identifier to the user via, e.g., the card slot 112. The gift card, e-certificate, voucher, etc. can later be used to make the online purchase by entering the unique identifier into the seller's payment web page.

In certain embodiments, the kiosk 100 can also be configured to provide the user with access to Internet sites that include a pay with cash option. This feature allows users to navigate to a seller's payment web page at the kiosk 100, enter the code from the gift card, e-certificate, voucher, etc., and thereby complete the purchase at the kiosk 100. In other embodiments, the kiosk 100 can be configured to automatically navigate the user interface 104 to the seller website and display the seller's payment web page after one of the "Checkout Now" icons 336 has been selected. The kiosk 100 can also be configured to automatically or at the user's request enter the unique code into the seller web page to complete the purchase.

The kiosk 100 may also be configured to allow users to log into their user accounts associated with the seller website (e.g., an Amazon® account, eBay® account, Nordstrom® account, etc.) to complete online purchases. The kiosk 100, for example, can display (e.g., on the user interface 104 and/or other display) a list of various sellers/merchants associated with the pay-by-cash kiosk system (e.g., a plurality of buttons associated with a plurality of sellers on one or more pages of the display), the user can select a button (e.g., on a touch screen) corresponding to one of the sellers, and the kiosk 100 can navigate to the selected seller's website to allow the user to access his or her seller-specific account. In other embodiments, the kiosk 100 can navigate to a page associated with the pay-by-cash kiosk system that allows the user to log into the seller-specific user account, and the pay-by-cash kiosk system can interface with the seller's database to obtain information associated with the seller-specific user account. In other embodiments, the user can enter the seller's web address into a browser via the user interface 104, and log into his or her user account directly from the seller's website.

Regardless of the particular method employed to access the seller website, after the user has deposited sufficient funds into the kiosk 100 (e.g., via the coin acceptor 108 and/or the bill acceptor 106), the user can pay for the items in the shopping cart (e.g., saved on the seller-specific user account) by entering the unique purchase code provided to the user by the kiosk 100 via, e.g., a voucher, gift card, e-certificate, etc. The kiosk 100 can also be configured to automatically enter the appropriate payment information (e.g., the unique purchase code) to complete the online purchase. In this embodiment, the kiosk 100 may also be configured to allow users to modify their virtual shopping carts by removing items from the virtual shopping cart and/or changing the quantity of the items. The virtual shopping cart can be displayed in a similar manner as the virtual shopping cart on the seller website. In other embodiments, the kiosk 100 can display an itemized listing of the contents of the user's online order. The kiosk 100 may also allow users to browse the seller website to add items to virtual shopping carts, and thereby provide the complete online shopping experience (e.g., from browsing to purchase) at the kiosk 100.

After completing the online purchase, the seller can complete the transaction by sending the items in the virtual shopping cart (i.e., the items associated with the online order) to the user. Physical items, for example, can be shipped or mailed to an address specified by the user via the user interface 104 and/or a personal electronic device. Virtual gift cards and/or e-gift certificates (e.g., iTunes® gift certificates, vouchers from deal websites, such as Groupon® and Living Social®, etc.) can be sent to a user-specified email address via the communications link. In certain embodiments, the kiosk 100 may be configured to allow users to purchase time on a certain service, such as cell phone minutes and/or online gaming minutes. The kiosk 100 can also be configured to add these minutes to the user's cell phone account or videogame account. In other embodiments, the kiosk 100 can be configured to interact with handheld computing devices in its near field to transfer the e-certificate, cell phone minutes, etc. directly to an associated application (e.g., a Groupon® application) on the handheld computing devices.

In further aspects of the technology, the kiosk 100 can be configured to add a value associated with deposited funds to preexisting virtual accounts, such as Pay Pal® accounts and/or eBay® accounts. A user, for example, can log into his or her virtual account via the user interface 104, deposit funds into the kiosk 100 via the bill acceptor 106 and/or the coin acceptor 108, and the kiosk 100 can transfer the deposited funds (or a value associated with the deposited funds) to the user's virtual account. In other embodiments, the kiosk 100 can dispense a voucher, certificate, receipt, etc. with a unique code from the dispensing slot 114 (Figure 1), and the user can then log into his or her virtual account (e.g., via a personal computer) and enter the voucher code to transfer a value associated with the deposited funds to the user's virtual account. In other embodiments, the user account described above with reference to Figure 3 (i.e., the user account associated with the pay-by-cash kiosk system) can include a virtual account of its own, and the user can add funds thereto by depositing currency in the kiosk 100, or withdraw or transfer funds as desired. The deposited funds can be accessed by the user in the future to make online purchases (e.g., via a personal computer, tablet computer, the kiosk 100, etc.). Accordingly, the kiosk 100 provides a convenient system with which users can transfer bills and/or coin currency to online accounts and utilize bills and/or coin currency to shop and purchase items online.

In still further aspects of the technology, the kiosk 100 can be configured to use the deposited funds to pay bills (e.g., wireless carrier bills, utility bills, etc.) online. For example, the kiosk 100 can dispense a voucher having a value associated with the deposited funds. The user can log into the user's bill pay account (e.g., via the kiosk 100, a personal computer, etc.), and enter the unique code on the voucher to pay for an outstanding balance on a bill. In other embodiments, the user can select a pay with cash option on the bill pay website, and receive a purchase code associated (via a remote database) with the balance due and the service provider (e.g., an electric company, a wireless carrier, etc.). Once the funds are deposited at the kiosk 100 and the purchase code has been entered via the user interface 104, the kiosk 100 can communicate with the service provider via a communications link to pay for the bill.

Figure 4 illustrates a suitable network environment for implementing various aspects of the consumer operated kiosks described above. One or more consumer operated kiosks (identified individually as a first kiosk 400a and a second kiosk 400b; referred to collectively as kiosks 400) can be operatively connected to a server 404 via the Internet, a dedicated network, and/or other wired or wireless communications link 402. The kiosks 400 are at least generally similar in structure and function as the kiosk 100 described above. In some embodiments, the kiosks 400 are first networked to one or more host or central computers 414 in a conventional manner, which are in turn operatively connected to the communications link 402 and the server 404.

The server 404 performs much or all of the functions for receiving, routing, and storing of application programs, electronic messages, and other information associated with features of the kiosk network. The server 404 can include a server engine, a content management component, and a database management component. The server engine performs basic processing and operating system level tasks. The content management component handles many of the functions in the embodiments described herein. In other embodiments, these functions can be performed by the kiosks 400 themselves. The database management component of the server 404 includes storage and retrieval tasks with respect to a database 406 coupled to the server 404, queries to the database 406, and storage of data. The database 406 can store at least some of the content exchanged between the kiosks 400, user account information (e.g., user preferences, order information, monetary values associated with previously deposited funds, etc.), and information related to making online purchases. As will be apparent to those skilled in the art, the server 404 can include a single server or a plurality of servers, and the database 406 can include a single database or a plurality of databases. Additionally, the server 404, including the database 406, may employ security measures to inhibit malicious attacks on the system and to preserve the integrity of the messages and data stored therein (e.g., firewall systems, secure socket layers (SSL) password protection schemes, encryption, and the like).

In the illustrated embodiment, the communications link 402 also connects the kiosks 400 to remote personal electronic devices (e.g., personal computers 408, tablets, smart phones, etc.). This allows consumers to use their personal computers, tablets, smart phones, etc. to manage user accounts stored in the database 406 and/or add items to virtual shopping carts. The virtual shopping carts of various online retailers can be tethered to the user accounts (e.g., as shown in Figure 3) to allow users to pay for the items in the virtual shopping carts via the kiosks 400.

As further shown in Figure 4, the kiosks 400 can be communicatively coupled to retail establishments (identified individually as first and second retail establishments 410a-b, respectively, and referred to collectively as the retail establishments 410) and/or retail establishment websites via the communications link 402 to wirelessly transfer payment information from the kiosks 400 and/or the database 406 to the retail establishment 410 and complete the online purchases. When the kiosks 400 are configured to dispense or otherwise provide vouchers that can be used to complete online purchases, the communications link 402 provides the connection between the retail establishment 410 and the personal electronic devices. In further embodiments, the communications link 402 can be configured to communicatively couple the kiosks 400 and/or the server 404 to financial institutions 412 (e.g., operators clearing houses, banks, etc.) to transfer funds from financial institutions to make online purchases.

A network environment, such as the network environment illustrated in Figure 4, can connect multiple kiosks 400 positioned in a plurality of publicly accessible areas, such as grocery stores, department stores, and drug stores. The maintenance of the networked kiosks 400 can then be managed from the backend by the server 404 and the database 406. The server 404, for example, can run routine maintenance checks on the kiosks 400 to identify mechanical problems and/or glitches in the user interface and display pages. The network environment also allows display information to be added to the database 406 and uploaded to one or more of the kiosks 400 from the backend. Other information, such as operating systems updates, can also be uploaded to the kiosks 400 from the backend via the communications link 402. In addition, the network environment allows user account information to be stored in the database 406 and shared among the kiosks 400 in the network, and track user activity at the networked kiosks 400.

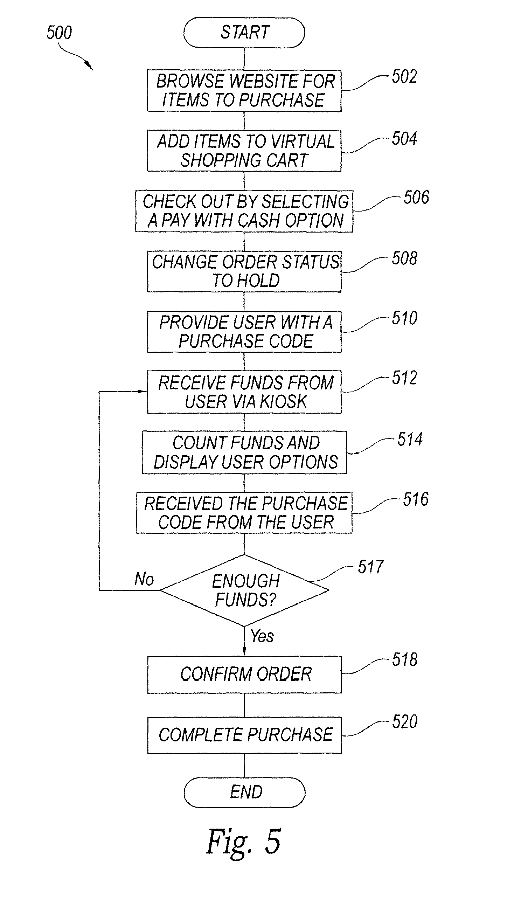

Figure 5 is a flow diagram of a routine 500 for paying with cash for online purchases using a kiosk system configured in accordance with embodiments of the disclosure. The kiosk system can include one or more kiosks (e.g., the kiosks 100 or 400 described with reference to Figures 1-4) operatively coupled to one or more remote databases and a remote computer (e.g., a host computer at a central processing facility) via a communications link (e.g., the communications link 402 of Figure 4). In block 502, the user browses a retailer's website via a personal electronic device (e.g., a home computer, tablet computer, smart phone, etc.) and/or at a kiosk for items (e.g., goods and services) to purchase, and in block 504 the user adds items to a virtual shopping cart. Once the user has placed all of the desired items into the virtual shopping cart, the routine 500 can proceed to block 506 in which the user begins the checkout process and selects a pay with cash option.

In response to selecting a pay with cash option, the routine 500 changes the status of the user's order to "hold" in a remote database (e.g., a database associated with the merchant) and/or otherwise temporarily suspends the transaction (block 508). In one embodiment, the hold condition provides the user a predefined period of time (e.g., one day, five days, 7 days, 12 days, etc.) in which the user can pay for and complete the online order. In other embodiments, the hold condition can be maintained until the user pays for the items in the virtual shopping cart. In block 510, the routine 500 provides the user with a unique purchase code associated with the user's order. The purchase code can be associated with online order information, such as the total cost of the user's order, the name of the retailer, etc., and stored on a remote database (e.g., associated with the pay-by-cash kiosk system and/or the merchant). For example, the purchase code can be assigned by the merchant/seller, and the purchase code and associated online order information can be communicated to and stored in the remote database of the kiosk system. In other embodiments, the purchase code can be assigned by the kiosk system.

In block 512, the user deposits funds at a kiosk via a bill acceptor, a coin acceptor, card reader (e.g., to receive funds via gift cards, debit cards, credit cards), mobile wallet near field communication, etc.), and in block 514 the kiosk counts the funds and displays options to the user (e.g., check out, save funds, etc.). In block 516, the kiosk prompts the user to enter the purchase code (e.g., via a user interface on the kiosk). In some embodiments, the routine 500 requests the user to enter the purchase code before depositing the funds, and in other embodiments the routine 500 requests the purchase code after the funds are deposited. The kiosk can communicate with a remote database (e.g., the remote database associated with the kiosk system) via a communications link to verify the purchase code and associate the purchase code with the transaction information related to the user's order (e.g., total cost, retailer, shipment information, etc.). If the kiosk has received sufficient funds to pay for the online order, the routine 500 can move to block 518 where the routine 500 requests that the user confirm the online order. During the confirmation step, the kiosk can request that the user enter or confirm delivery information (e.g., shipment address and/or email address). If insufficient funds are received, in decision block 517 the kiosk can request the user to add more funds and/or edit the online order (e.g., remove items from the virtual shopping cart) until the value received by the kiosk is sufficient to pay for the online order. Once the online order is confirmed, the routine 500 can move to block 520 to complete the purchase. The kiosk, for example, can communicate with a remote server to transfer funds corresponding to the total value of the online order to the retail establishment.

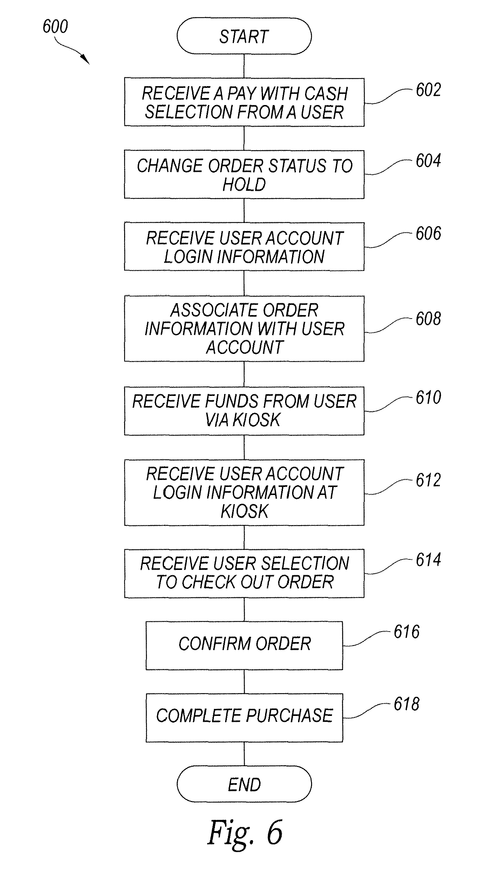

Figure 6 is a flow diagram of a routine 600 for paying with cash for online purchases using a kiosk system configured in accordance with other embodiments of the disclosure. Similar to the routine 500 described above, the initial steps of the routine 600 can include adding items to a virtual shopping cart and selecting a pay with cash option upon checkout. In the routine 600, however, associates online order information with user accounts stored on a remote database (e.g., associated with the pay-by-cash kiosk system). When the kiosk system receives the pay with cash selection from the user (block 602), the routine 600 changes the status of the online order to hold (block 604), and requests that the user sign into or create a user account associated with the pay-by-cash kiosk system. In block 606, the routine 600 receives the user account identification information (e.g., user name and password), and in block 608 the routine 600 associates the online order information (e.g., total cost, retailer, delivery information, etc.) with the user account and stores it in the remote database associated with the pay-by-cash system. In certain embodiments, the kiosk system or the merchant provides the user with a unique purchase code that is associated with the online order information, and the user enters the unique purchase code when logged into the user account to associate the user account with the online order information.

In block 610, the kiosk receives funds (e.g., bills or coins) from the user via a bill acceptor, coin acceptor, card swipe, and/or other suitable device for receiving funds. If the user created and/or saved the order at a location other than the kiosk (e.g., at a home computer, at another kiosk in the kiosk system, etc.), the routine 600 can request the user to log into the user account at the kiosk to access the online order information (block 612). In various embodiments, the user account can be associated with the funds deposited at the kiosk during the present transaction and/or funds deposited during previous transactions (e.g., at kiosks within the kiosk system during previous transactions) and the information can be stored on the remote database. In block 614, the user selects a checkout option associated with one or more orders, and in block 616 the routine 600 receives confirmation of the order from the user. After confirmation, the routine 600 proceeds to block 618 where the routine 600 accesses the monetary value associated with the user account to purchase the order and complete the transaction.

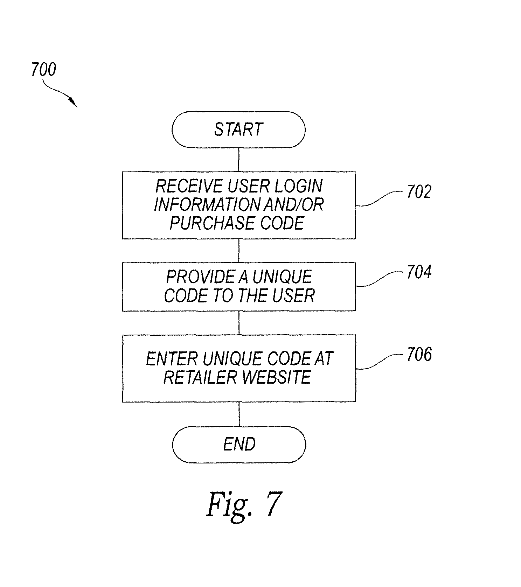

Figure 7 is a flow diagram of a routine 700 for paying with cash for online purchases using a kiosk system configured in accordance with further embodiments of the disclosure. Similar to the routines 500 and 600 described above, the initial steps of the routine 700 can include adding items to a virtual shopping cart, selecting a pay with cash option upon checkout, changing the status of the order to hold, and depositing funds (e.g., bills) into a kiosk. In block 702, the user can enter user account login information and/or a purchase code associated with the order via a user interface at the kiosk (e.g., the kiosks 100 and/or 400 described above with reference to Figures 1-4). If sufficient funds have been deposited, the kiosk can dispense, display, or otherwise provide a unique code to the user (block 704). The unique code can be associated with a monetary value related to the total funds received from the user at the kiosk, and this information can be stored on a remote database. The unique code can be provided on a paper voucher or receipt dispensed from the kiosk via a dispensing slot, a gift card dispensed via a gift card slot, an e-certificate sent to the user via email, on a smart phone application via near field communication, and/or other suitable mediums for providing the unique code. In certain embodiments, the unique code is generic to a plurality of online merchants, and in other embodiments the unique code is specific to a user-selected online merchant. The user, for example, can select from a plurality of different online merchants (e.g., listed on a user interface of the kiosk), and the unique code can be associated with the selected merchant.

The user can enter or otherwise provide the unique code on the retailer website (e.g., on the payment page) to complete the purchase (block 706), and initiate transfer of the appropriate funds to the online merchant. In certain embodiments, the retailer's payment page can be accessed via the kiosk, and in other embodiments the payment page must be accessed via a personal computer, tablet computer, and/or smart phone. The amount transferred to the online merchant can be deducted from the monetary value associated with the unique code. If the unique code is associated with more funds than were transferred to the online merchant, the unique code can be used for future online purchases. In this manner, the user account can function similar to a bank account in which the user can continue to add funds to the user account (e.g., by depositing money at the consumer operated kiosk) and withdraw funds from the user account (e.g., by making online purchases) using the unique code and/or other suitable identifier to pay for online purchases.

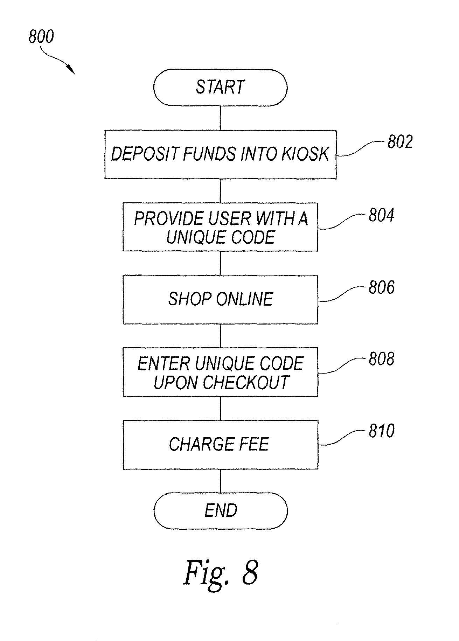

Figure 8 is a flow diagram of a routine 800 for paying with bills and/or coins for online purchases using a kiosk system configured in accordance with still further embodiments of the disclosure. In block 802, the user can deposit funds into a consumer operated kiosk (e.g., the kiosks 100 and 400 of Figures 1-4). In response to a user selection of, e.g., redeem value online, the kiosk can provide the user with a unique code associated with the value of the deposited funds (block 804). The unique code can be printed on a receipt, emailed to the user as part of an e-certificate, displayed on a screen or monitor, printed on a card, transferred to a mobile phone application, and/or otherwise provided to the user. The unique code can be stored in a remote database and associated with the funds deposited at the kiosk and/or kiosks operatively coupled thereto. The user can then shop online (block 806), and enter the unique code when checking out online to pay for at least a portion of the purchase (block 808). In various embodiments, the routine 800 can also charge a fee for providing the user the option to pay for online purchases with cash (block 810). For example, a fee can be deducted at the kiosk after the user has deposited the funds, and the unique code can be associated with value corresponding to the total funds deposited less the fee. In other embodiments, the fee can be charged at the time of making the online purchase (e.g., a percentage of the order or predetermined monetary value can be added to the total order cost). Fees can also be charged in any one of the routines 500, 600 and 700 described above with reference to Figures 5-7.

From the foregoing, it will be appreciated that specific embodiments of the disclosure have been described herein for purposes of illustration, but that various modifications may be made without deviating from the spirit and scope of the invention. Aspects of the invention described in the context of particular embodiments may be combined or eliminated in other embodiments. Further, while advantages associated with certain embodiments of the invention have been described in the context of those embodiments, other embodiments may also exhibit such advantages, and no embodiment need necessarily exhibit such advantages to fall within the scope of the invention. Accordingly, the invention is not limited, except as by the appended claims.
**The following is a list of further preferred embodiments of the invention:**
Embodiment 1. A method of making online purchases using bills and/or coins, the method comprising:
   receiving funds from a user at a consumer operated kiosk, wherein the funds include bills and/or coins;
   receiving online order information at the consumer operated kiosk, wherein the online order information is associated with a user account stored on a remote database and includes a cost of an online order from a third party merchant; and
   initiating transfer of at least a portion of the received funds to the third party merchant to pay for the online order.
Embodiment 2. The method of embodiment 1, further comprising:
   receiving user identification information at the consumer operated kiosk, wherein the user identification information corresponds to the user account stored on a remote database; and
   sending the user identification information to a remote computer to request the online order information.
Embodiment 3. The method of embodiment 1 wherein receiving funds from the user at the consumer operated kiosk further comprises receiving funds associated with a gift card and/or an e-certificate.
Embodiment 4. The method of embodiment 1, further comprising:
   receiving the online order information and a unique purchase code associated with the online order information at a remote computer communicatively coupled to the consumer operated kiosk and to the remote database, wherein the online order information and the unique purchase code is received from the third party merchant in response to a user payment selection that corresponds to paying for the online order at the consumer operated kiosk; and
   associating the online order information with the user account on the remote database after the user has logged into the user account and entered the unique purchase code.
Embodiment 5. The method of embodiment 1, further comprising associating a monetary value with the user account on the remote database, wherein the monetary value is related to the received funds less any funds transferred to the third party merchant, and wherein the monetary value is available to the user for making future purchases from third party merchants.
Embodiment 6. The method of embodiment 5, further comprising:
   providing a plurality of purchase options on a user interface of the consumer operated kiosk, wherein the purchase options are associated with purchasing an e-certificate, cell phone minutes, and/or online gaming minutes at the consumer operated kiosk;
   receiving a user selection via the user interface corresponding to at least one of the purchase options;
   deducting at least a portion of the monetary value from the user account to pay for the selected e-certificate, cell phone minutes, and/or online gaming minutes; and
   using near field communication to transfer the selected e-certificate, cell phone minutes, and/or online gaming minutes from the consumer operated kiosk to a corresponding handheld computing device application.
Embodiment 7. The method of embodiment 1, further comprising displaying the online order information on a user interface of the consumer operated kiosk, wherein the online order information further comprises a listing of items in a virtual shopping cart associated with the online order.
Embodiment 8. The method of embodiment 7, further comprising:
   receiving a user selection associated with modifying items in the virtual shopping cart; and
   updating the cost of the online order to reflect modifications to the virtual shopping cart.
Embodiment 9. The method of embodiment 1, further comprising:
   displaying a plurality of online third party merchants on a user interface of the consumer operated kiosk; receiving a user selection via the user interface corresponding to one of the online third party merchants; and
   receiving user identification information associated with the user account after receiving the user selection, wherein the user account is associated with the selected third party merchant.
Embodiment 10. The method of embodiment 1, further comprising:
   providing a unique code to the user on a user interface of the consumer operated kiosk, wherein the unique code is associated with a monetary value related to the funds received at the consumer operated kiosk; and
   wherein initiating transfer of at least a portion of the received funds further comprises initiating transfer of at least a portion of the received funds in response to the unique code being entered by the user during checkout at a website associated with the third party merchant.
Embodiment 11. The method of embodiment 10 wherein providing the unique code to the user comprises wirelessly transferring the unique code from the consumer operated kiosk to a handheld computing device application associated with the user account.
Embodiment 12. A method of making online purchases using bills and/or coin, the method comprising:
   receiving online order information at a central computer associated with a consumer operated kiosk system, wherein the online order information is associated with an online order from a third party merchant;
   associating the online order information with a user account associated with the consumer operated kiosk system, wherein the user account is stored on a remote database communicatively coupled to the central computer;
   receiving user identification information corresponding to the user account at a consumer operated kiosk communicatively coupled to the central computer;
   displaying at least a portion of the online order information at the consumer operated kiosk;
   receiving funds from a user at the consumer operated kiosk, wherein the funds include bills and/or coins; and
   initiating transfer of at least a portion of the received funds to the third party merchant to pay for the online order.
Embodiment 13. The method of embodiment 12, further comprising associating a monetary value with the user account on the remote database, wherein the monetary value is related to the funds received at the consumer operated kiosk less any transferred funds and/or fees, and wherein the monetary value is available for payment of future online purchases.
Embodiment 14. The method of embodiment 13, further comprising providing a unique code to the user at the consumer operated kiosk, wherein the unique code is associated with the monetary value, and wherein the unique code is configured for use during checkout of a future online order to pay for at least a portion of the future online order.
Embodiment 15. The method of embodiment 12, further comprising providing the user with an e-certificate and/or a gift cart having a monetary value, wherein the monetary value is related to the funds received at the consumer operated kiosk.
Embodiment 16. A consumer operated kiosk system for making online purchases, the consumer operated kiosk comprising:
   a remote database comprising a plurality of user accounts, wherein the individual user accounts are associated with online order information, and wherein the online order information includes costs of one or more online orders from one or more third party online merchants; and
   a plurality of consumer operated kiosks communicatively coupled to the remote database, wherein the individual consumer operated kiosks include:
      means for receiving funds; and
      means for receiving user identification information associated with the user accounts; and
      a communications facility configured to -
         communicate with the remote database to retrieve online order information associated with selected user accounts in response to receiving user identification information corresponding to the selected user accounts, and
         initiate transfer of at least a portion of funds received at the individual consumer operated kiosk to the third party online merchants.
Embodiment 17. The consumer operated kiosk system of embodiment 16 wherein the means for receiving funds comprises a bill acceptor and/or a bulk coin acceptor.
Embodiment 18. The consumer operated kiosk system of embodiment 16 wherein the individual user accounts stored on the remote database are each associated with a monetary value available to a user for future online purchases, and wherein the monetary value is related to the funds received from the user at the consumer operated kiosks in the consumer operated kiosk system less any funds transferred to third party online merchants.
Embodiment 19. The consumer operated kiosk system of embodiment 16 wherein the individual consumer operated kiosks further comprise a display configured to provide a plurality of user selection options corresponding to third party merchants.
Embodiment 20. The consumer operated kiosk system of embodiment 16 wherein the individual consumer operated kiosks are configured to communicate e-certificates, cell phone minutes, and/or online gaming minutes to corresponding applications on a smart phone via near field communication.
Embodiment 21. A method of making purchases online using currency, the method comprising:
   providing a consumer operated kiosk;
   receiving funds from a user via the consumer operated kiosk, wherein the funds include at least one of cash and coins;
   retrieving order information from a remote database via a communications link,
   wherein the order information is related to an order from an online merchant and includes a total cost; and
   paying for the order by transferring a value related to the received funds to the online merchant.
Embodiment 22. A consumer operated kiosk for making online purchases, as disclosed herein.
Embodiment 23. A system for making online purchases via a consumer operated kiosk, as disclosed herein.
Embodiment 24. A method of making purchases online using a consumer operated kiosk, as disclosed herein.

## Claims

1. A method of making online purchases using bills and/or coins, the method comprising:
receiving funds from a user at a consumer operated kiosk, wherein the funds include bills and/or coins;
receiving online order information at the consumer operated kiosk, wherein the online order information is associated with a user account stored on a remote database and includes a cost of an online order from a third party merchant; and
initiating transfer of at least a portion of the received funds to the third party merchant to pay for the online order.

2. The method of claim 1, further comprising:
receiving user identification information at the consumer operated kiosk, wherein the user identification information corresponds to the user account stored on a remote database; and
sending the user identification information to a remote computer to request the online order information.

3. The method of claim 1 or 2 wherein receiving funds from the user at the consumer operated kiosk further comprises receiving funds associated with a gift card and/or an e-certificate.

4. The method of any one of claims 1-3, further comprising:
receiving the online order information and a unique purchase code associated with the online order information at a remote computer communicatively coupled to the consumer operated kiosk and to the remote database, wherein the online order information and the unique purchase code is received from the third party merchant in response to a user payment selection that corresponds to paying for the online order at the consumer operated kiosk; and
associating the online order information with the user account on the remote database after the user has logged into the user account and entered the unique purchase code.

5. The method of any one of claims 1-4, further comprising associating a monetary value with the user account on the remote database, wherein the monetary value is related to the received funds less any funds transferred to the third party merchant, and wherein the monetary value is available to the user for making future purchases from third party merchants.

6. The method of claim 5, further comprising:
providing a plurality of purchase options on a user interface of the consumer operated kiosk, wherein the purchase options are associated with purchasing an e-certificate, cell phone minutes, and/or online gaming minutes at the consumer operated kiosk;
receiving a user selection via the user interface corresponding to at least one of the purchase options;
deducting at least a portion of the monetary value from the user account to pay for the selected e-certificate, cell phone minutes, and/or online gaming minutes; and
using near field communication to transfer the selected e-certificate, cell phone minutes, and/or online gaming minutes from the consumer operated kiosk to a corresponding handheld computing device application.

7. The method of any one of claims 1-6, further comprising displaying the online order information on a user interface of the consumer operated kiosk, wherein the online order information further comprises a listing of items in a virtual shopping cart associated with the online order.

8. The method of claim 7, further comprising:
receiving a user selection associated with modifying items in the virtual shopping cart; and
updating the cost of the online order to reflect modifications to the virtual shopping cart.

9. The method of any one of claims 1-8, further comprising:
displaying a plurality of online third party merchants on a user interface of the consumer operated kiosk; receiving a user selection via the user interface corresponding to one of the online third party merchants; and
receiving user identification information associated with the user account after receiving the user selection, wherein the user account is associated with the selected third party merchant.

10. The method of any one of claims 1-9, further comprising:
providing a unique code to the user on a user interface of the consumer operated kiosk, wherein the unique code is associated with a monetary value related to the funds received at the consumer operated kiosk; and
wherein initiating transfer of at least a portion of the received funds further comprises initiating transfer of at least a portion of the received funds in response to the unique code being entered by the user during checkout at a website associated with the third party merchant.

11. The method of claim 10 wherein providing the unique code to the user comprises wirelessly transferring the unique code from the consumer operated kiosk to a handheld computing device application associated with the user account.

12. A consumer operated kiosk system for making online purchases, the consumer operated kiosk comprising:
a remote database comprising a plurality of user accounts, wherein the individual user accounts are associated with online order information, and wherein the online order information includes costs of one or more online orders from one or more third party online merchants; and
a plurality of consumer operated kiosks communicatively coupled to the remote database, wherein the individual consumer operated kiosks include:
means for receiving funds; and
means for receiving user identification information associated with the user accounts; and
a communications facility configured to -
communicate with the remote database to retrieve online order information associated with selected user accounts in response to receiving user identification information corresponding to the selected user accounts, and
initiate transfer of at least a portion of funds received at the individual consumer operated kiosk to the third party online merchants.

13. The consumer operated kiosk system of claim 12 wherein the individual user accounts stored on the remote database are each associated with a monetary value available to a user for future online purchases, and wherein the monetary value is related to the funds received from the user at the consumer operated kiosks in the consumer operated kiosk system less any funds transferred to third party online merchants.

14. The consumer operated kiosk system of claim 12 or 13 wherein the individual consumer operated kiosks further comprise a display configured to provide a plurality of user selection options corresponding to third party merchants.

15. The consumer operated kiosk system of any one of claims 12-14 wherein the individual consumer operated kiosks are configured to communicate e-certificates, cell phone minutes, and/or online gaming minutes to corresponding applications on a smart phone via near field communication, or
wherein the means for receiving funds comprises a bill acceptor and/or a bulk coin acceptor.
